(19) Europäisches Patentamt / European Patent Office / Office européen des brevets

(11) **EP 4 764 840 A1**

(12) **EUROPEAN PATENT APPLICATION**

(43) Date of publication:
**24.06.2026 Bulletin 2026/26**

(21) Application number: **24221878.2**

(22) Date of filing: **19.12.2024**

(51) International Patent Classification (IPC):
*G06F 9/30* *(2018.01)*

(52) Cooperative Patent Classification (CPC):
**G06F 9/30036; G06F 9/3001; G06F 9/30014;
G06F 9/30038; G06F 9/30101; G06F 9/3888**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Imec VZW
3001 Leuven (BE)**

(72) Inventors:
• **BHATTACHARJEE, Debjyoti
3000 Leuven (BE)**

• **SENGUPTA, Sourav
3000 Leuven (BE)**
• **LENORMAND, Erwan
4000 Liège (BE)**
• **SVEDAS, Jonas
Cambridge, CB1 8HD (GB)**
• **MEJDRICH, Eric
3001 Heverlee (BE)**

(74) Representative: **Winger
Mouterij 16 bus 101
3190 Boortmeerbeek (BE)**

(54) **CONFIGURABLE DATAFLOW BACKEND FOR SUBWORD PARALLEL SIMT PROCESSOR**

(57)      A Single Instruction Multiple Threads (SIMT) processor core comprising: (a) a configurable dataflow backend operative to support subword parallelism for execution of mixed-precision arithmetic operations, wherein the backend includes multiple dataflow network stages, each dataflow network stage including one or more functional units configurable to process multiple subwords within a register in parallel; (b) a configuration memory storing configuration data defining operational configurations of the dataflow network stages in the backend, wherein the configuration memory is accessible via a configuration index mechanism operative to select configuration data from the configuration memory to control the dataflow network stages in the backend, and wherein the configuration index mechanism is configured for enabling the dataflow backend to support multiple variations of mixed-precision arithmetic operations without requiring dedicated instructions for each variation.

FIG. 1

## Description

### Field of the invention

The present invention relates to the field of computer processors, and more specifically to Single Instruction Multiple Threads (SIMT) processor cores.

### Background of the invention

Advancements in compute-intensive applications have heightened the demand for efficient execution of arithmetic operations. Single-Instruction-Multiple-Threads (SIMT) processor architectures are widely employed to achieve parallelism by executing the same instruction across multiple hardware threads. In these architectures, arithmetic operations typically involve reading source operands from a register file and storing the results back into it. The size of the logical word for operands and results is expected to match the width of the register; otherwise, the data is sign-extended to fit the register dimensions. For instance, in a 64-bit register, a 32-bit integer would be sign-extended to occupy the full 64 bits.

With the rise of deep learning workloads, there has been a significant shift towards utilizing lower-precision data formats, such as 4-bit or 8-bit integers. These workloads are often resilient to quantization errors, allowing for reduced precision without substantially affecting performance. However, working with low-precision data in SIMT architectures presents several challenges.

One of the primary issues is the inefficiency in data fetching from memory. Low-precision data, when stored in memory, must often be loaded into registers that have a much larger word size. This mismatch leads to underutilization of the hardware capacity, as only a small portion of the register's capacity is used, resulting in inefficient memory bandwidth utilization. Likewise, the mismatch leads to underutilization of the overall data, as more data could have been fetched if it could be loaded more efficiently.

Another challenge involves the diverse computational requirements of different deep learning algorithms. Low-precision computations require various arithmetic operations with varying degrees of granularity in low-precision or mixed-precision operations. In SIMT architectures that use a reduced instruction set computing (RISC) instruction set, the relatively small size of the instructions limits the ability to define dedicated instructions for each variation of these operations. This constraint makes it difficult to efficiently support the wide range of operations needed for different algorithms within the existing instruction set architecture.

Additionally, the frontend of SIMT cores, responsible for instruction fetching and decoding, may not be optimized for handling the complexities introduced by low-precision or mixed-precision computations. Since all threads share the same frontend, there can be bottlenecks when attempting to execute instructions that require specialized handling or increased flexibility in the backend execution units.

EP2725484 provides a processor for performing parallel processing within a register. An exemplary processor may include a processing element having a compute unit and a register file. The register file includes a register that is divisible into lanes for parallel processing. The processor further includes a mask register and a predicate register. The mask register and the predicate register respectively include a number of mask bits and predicate bits equal to a maximum number of divisible lanes of the register. A state of the mask bits and predicate bits is set to respectively achieve enabling/disabling of the lanes from executing an instruction and conditional performance of an operation defined by the instruction. Further, the processor is operable to perform a reduction operation across the lanes of the processing element and/or generate an address for each of the lanes of the processing element. EP2725484 provides a solution for a single core architecture; implementing the use of mask registers and predicate registers for SIMT based computation would generate extra overhead. The active status of each lane during an instruction execution is decided by the contents of the mask register. This can lead to an increase in the number of clock cycles required to carry out the instruction.

There is, however, still a need for further advancements in the field to address at least some of the above challenges.

### Summary of the invention

It is an object of embodiments of the present invention to provide efficient execution of mixed-precision arithmetic operations in a SIMT processor core. This objective is accomplished by the aspects of the present invention.

In a first aspect, the present invention relates to a Single Instruction Multiple Threads (SIMT) processor core comprising: (a) a configurable dataflow backend operative to support subword parallelism for execution of mixed-precision arithmetic operations, wherein the backend includes multiple dataflow network stages, each dataflow network stage including one or more functional units configurable to process multiple subwords within a register in parallel; (b) a configuration memory storing configuration data defining operational configurations of the dataflow network stages in the backend, wherein the configuration memory is accessible via a configuration index mechanism operative to select configuration data from the configuration memory to control the dataflow network stages in the backend, wherein the configuration index mechanism is configured for enabling the dataflow backend to support multiple variations of mixed-precision arithmetic operations without requiring dedicated instructions for each variation. This enables efficient execution of mixed-precision arithmetic operations.

In embodiments, the dataflow backend may be pipelined, i.e. designed to execute multiple stages of a computation or data processing flow in parallel rather than sequentially. Each stage of the pipeline processes data and passes it on to the next stage as soon as its part of the task is complete. This allows for high throughput execution.

In embodiments, the dataflow backend may include multiple pipeline stages. This enables complex dataflow graphs to be implemented. As an example only, the invention not being limited thereto, the dataflow backend may include at least three pipeline stages. This provides a good balance between complexity and performance.

In embodiments, each functional unit of the dataflow network stage may be configurable to perform at least one of a plurality of arithmetic operations, such as addition, multiplication, minimum, and maximum operations. This allows supporting common arithmetic operations. In embodiments, in a given cycle, each functional unit may be configured to perform a selected arithmetic operation or remain inactive (non-functional). This provides flexibility to map different dataflow graphs.

In embodiments, the functional units may be configurable via control bits in the configuration data. This allows compact encoding of the dataflow configuration.

In embodiments, the dataflow backend may be configured to perform at least one of rounding, truncation, fixed-point arithmetic, and normalization to manage precision across pipeline stages. This enables handling of different precision requirements.

In embodiments, the functional units may be configurable to perform approximate computations by adjusting output precision. This can provide performance and energy efficiency benefits for error-tolerant applications.

In embodiments, operand reuse may be performed within at least one pipeline stage to reduce data fetch overhead. This improves performance by reducing memory bandwidth requirements.

In embodiments, the output precision of the dataflow backend may be less than or equal to the size of a register in the register file to enable writing outputs without requiring additional register file ports. This simplifies the register file design.

In embodiments, the configuration memory may be a memory-mapped input/output (MMIO) region, allowing the processor core to communicate with the configuration memory via standard memory access mechanisms. This allows easy access to the configuration memory.

In embodiments, the configuration data may include mask bits for selectively enabling or disabling functional units within each dataflow network stage during execution. This provides fine-grained control over the dataflow.

In embodiments, the configuration data may include control bits for directing data flow between successive dataflow network stages. This allows flexible dataflow patterns to be implemented.

In embodiments, the configuration data may be broadcasted to all threads within the SIMT processor core. This amortizes the configuration overhead across multiple threads.

In embodiments, the configuration index mechanism may comprise a status register storing a configuration index value. This allows a larger configuration space to be addressed, hence it allows addressing a larger configuration memory for a wider range of dataflow options. This enables more flexibility.

In embodiments, the configuration index mechanism may be incorporated as part of an instruction in an instruction set architecture. This provides a compact way to specify the configuration. In embodiments, including the configuration index in an instruction may allow addressing a limited number of dataflow network stage configurations, e.g. due to instruction size constraints, for instance in case of a RISC based instruction set. This leads to a simpler design. The invention is not, however, limited to RISC based systems; also systems with more complicated instruction sets, such as else systems, for instance, could gain efficiency from the use of a set-up in accordance with embodiments of the present invention.

In embodiments, the configuration index mechanism may enable support for variable levels of subword parallelism. This allows the dataflow to be optimized for different data types.

In a second aspect, the present invention relates to a method of executing mixed-precision arithmetic operations in a Single Instruction Multiple Threads (SIMT) processor core, the method comprising: (a) utilizing a configurable dataflow backend to perform subword parallelism, wherein the backend includes multiple dataflow network stages, each dataflow network stage comprising one or more functional units configurable to process multiple subwords within a register in parallel; (b) accessing configuration data from a configuration memory that stores operational configurations for the dataflow network stages; (c) selecting the configuration data via a configuration index mechanism to control the dataflow network stages in the backend; wherein the configuration index mechanism enables support for multiple variations of mixed-precision arithmetic operations without requiring dedicated instructions for each variation.

In embodiments, the method may further comprise configuring the functional units via control bits in the configuration data. This allows compact encoding of the dataflow configuration.

In embodiments, the method may further comprise performing at least one of rounding, truncation, fixed-point arithmetic, and normalization to manage precision across pipeline stages. This enables handling of different precision requirements.

In embodiments, the method may further comprise configuring the functional units to perform approximate computations by adjusting output precision. This can provide performance and energy efficiency benefits for error-tolerant applications.

In embodiments, the method may further comprise performing operand reuse within at least one pipeline stage to reduce data fetch overhead. This improves performance by reducing memory bandwidth requirements.

In embodiments, output precision may be limited to the size of a register in a register file to enable writing outputs without requiring additional register file ports. This simplifies the register file design.

In embodiments, the method may comprise using mask bits in the configuration data for selectively enabling or disabling functional units within each dataflow network stage during execution. This provides fine-grained control over the dataflow.

In embodiments, the method may comprise using control bits in the configuration data for directing data flow between successive dataflow network stages. This allows flexible dataflow patterns to be implemented.

In embodiments, the method may further comprise broadcasting the configuration data to all threads within the SIMT processor core. This amortizes the configuration overhead across multiple threads.

In embodiments, the method may further comprise setting a status register with a configuration index value to select the configuration data. This allows a large configuration space to be addressed.

In a third aspect, the present invention relates to a non-transitory computer-readable storage medium storing instructions that, when executed by a Single Instruction Multiple Threads (SIMT) processor core comprising a configurable dataflow backend and a configuration memory, cause the processor to: (a) execute mixed-precision arithmetic operations using subword parallelism through the configurable dataflow backend, wherein the backend includes multiple dataflow network stages with functional units configurable to process multiple subwords within a register in parallel; (b) access configuration data defining operational configurations of the dataflow network stages from the configuration memory; (c) select the configuration data via a configuration index mechanism to control the dataflow network stages in the backend; wherein the configuration index mechanism enables the processor core to support multiple variations of mixed-precision arithmetic operations without requiring dedicated instructions for each variation. Examples of non-transitory computer-readable storage media include hard drives, solid-state drives, memory cards, and magnetic tapes, the present invention not being limited thereto.

In embodiments, the instructions may further cause the processor to configure the dataflow backend as a pipelined dataflow network. This allows for high throughput execution.

In embodiments, the instructions may further cause the processor to configure multiple pipeline stages, for instance at least three pipeline stages, in the dataflow backend. This enables complex dataflow graphs to be implemented. Having a limited number of pipeline stages provides a good balance between complexity and performance.

In embodiments, the instructions may further cause the processor to configure each functional unit to perform at least one of a plurality of arithmetic operations, such as addition, multiplication, minimum, and maximum operations. This allows supporting common arithmetic operations.

In embodiments, the instructions may further cause the processor to configure, in a given cycle, each functional unit to perform a selected arithmetic operation or remain inactive (non-functional). This provides flexibility to map different dataflow graphs.

In embodiments, the instructions may further cause the processor to configure the functional units via control bits in the configuration data. This allows compact encoding of the dataflow configuration.

In embodiments, the instructions may further cause the processor to perform at least one of rounding, truncation, fixed-point arithmetic, and normalization to manage precision across pipeline stages. This enables handling of different precision requirements.

In embodiments, the instructions may further cause the processor to configure the functional units to perform approximate computations by adjusting output precision. This can provide performance and energy efficiency benefits for error-tolerant applications.

In embodiments, the instructions may further cause the processor to perform operand reuse within at least one pipeline stage to reduce data fetch overhead. This improves performance by reducing memory bandwidth requirements.

In embodiments, the instructions may further cause the processor to limit output precision to the size of a register in a register file to enable writing outputs without requiring additional register file ports. This simplifies the register file design.

In embodiments, the instructions may further cause the processor to broadcast the configuration data to all threads within the SIMT processor core. This amortizes the configuration overhead across multiple threads.

In embodiments, the instructions may further cause the processor to set a status register with a configuration index value to select the configuration data. This allows a larger configuration space to be addressed.

It is an advantage of embodiments of the present invention that they support subword parallelism in SIMT cores while maintaining compatibility with RISC-based instruction sets. The invention is not limited to systems with RISC-based instruction sets; also systems with more complicated instruction sets, such as for instance CISC-based systems, can gain efficiency if implemented in accordance with embodiments of the present invention. It is a further advantage of embodiments of the present invention that the configurable backend allows for custom-defined instructions and backend configurations, enabling efficient execution of low-precision and mixed-precision arithmetic operations without the need for multiple dedicated instructions. It is an advantage of embodiments of the present invention that they provide increased throughput with reduced bandwidth requirements by utilizing dataflow-based subword-parallel operations. It is a further advantage of embodiments of the present invention that the overhead of storing configuration bits is amortized across multiple threads, enhancing efficiency in SIMT architectures. It is an advantage of embodiments of the present invention that they allow for higher reuse of operands within the dataflow network, thereby reducing data fetch overhead and increasing the throughput in terms of operations per byte fetched. It is a further advantage of embodiments of the present invention that they ensure output precision is less than or equal to the register size, enabling outputs to be written back to the register file without the need for additional ports. It is an advantage of embodiments of the present invention that they offer high-density computation solutions for narrow precision computing, which is particularly beneficial for accelerating deep learning workloads that are resilient to quantization. It is a further advantage of embodiments of the present invention that they lower memory requirements by allowing packed information to be directly loaded into register files, thereby improving efficiency when working with low-precision data formats.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

The invention will now be described further, by way of example, with reference to the accompanying drawings, in which:

FIG. 1 is a block diagram of a SIMT processor core according to embodiments of the present invention.
FIG. 2 is a dataflow diagram of a three-stage fused multiply add operation on packed 8-bit integers in a 32-bit architecture according to embodiments of the present invention.
FIG. 3 is a dataflow diagram utilizing a fused multiply add pipeline for fixed precision packed 8-bit operands across pipeline stages in a 32-bit architecture according to embodiments of the present invention.
FIG. 4 is a dataflow diagram utilizing a fused multiply add pipeline for mixed precision packed 8-bit and packed 16-bit operands in a 64-bit architecture according to embodiments of the present invention.
FIG. 5 is a dataflow diagram for math expressions utilizing a fused multiply add pipeline for packed 8-bit integers with 2x operand reuse in a 16-bit architecture according to embodiments of the present invention.
FIG. 6 is a schematic illustration of a method of executing mixed-precision arithmetic operations in a SIMT processor core, in accordance with embodiments of the present invention.

In the different figures, the same reference signs refer to the same or analogous elements. Any reference signs in the claims shall not be construed as limiting the scope.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

DEFINITIONS

The following terms are provided solely to aid in the understanding of the invention.

As used herein, and unless otherwise specified, the term "Single Instruction Multiple Threads (SIMT) processor core" refers to a processor core architecture where a single instruction is executed simultaneously across multiple threads, each operating independently on its own data. Examples of specific embodiments include graphics processing units (GPUs) that execute the same instruction across numerous data threads (e.g. pixels or pixel sets) in parallel.

As used herein, and unless otherwise specified, the term "configurable dataflow backend" refers to a portion of the processor that can be programmed or configured to perform various data processing operations by defining the flow of data through a network of functional units. This backend's operational behaviour is determined by configuration data. Examples of specific embodiments include programmable pipelines in digital signal processors that adapt to different computational tasks based on configuration settings.

As used herein, and unless otherwise specified, the term "subword parallelism" refers to the ability to process multiple smaller data elements, called subwords, within a single larger data word or register simultaneously in parallel. Examples of specific embodiments include dividing a 32-bit register into four 8-bit subwords and performing simultaneous arithmetic operations on all four 8-bit values within a single instruction cycle.

As used herein, and unless otherwise specified, the term "mixed-precision arithmetic operations" refers to computational operations involving operands of different numerical precisions, such as combining 16-bit and 32-bit numbers in a single operation. Examples of specific embodiments include performing calculations where higher precision is required for specific operands while others can be processed with lower precision to optimize performance and resource usage.

As used herein, and unless otherwise specified, the term "dataflow network stages" refers to sequential processing stages within the dataflow backend, where each stage comprises one or more functional units that perform specific operations on data as the data moves through the stages. Examples of specific embodiments include pipeline stages in a processor where data undergoes operations like addition, multiplication, or logical transformations in a staged manner.

As used herein, and unless otherwise specified, the term "corresponding" in the context of configuration index mechanism stage pointing to a location in a configuration memory stage for controlling a dataflow network stage, refers to a part of the configuration index mechanism and a part of the configuration memory stage that cooperate to control a particular stage of the dataflow network. The three are then said to be corresponding.

As used herein, and unless otherwise specified, the term "functional units configurable to process multiple subwords within a register in parallel" refers to processing elements within the dataflow network stages that can be programmed to simultaneously perform operations on multiple smaller data elements (subwords) contained within a single register. Examples of specific embodiments include arithmetic logic units (ALUs) configured to execute parallel addition or multiplication on segmented data within a register.

As used herein, and unless otherwise specified, the term "configuration memory" refers to a memory component that stores configuration data which defines the operational settings and behaviours of the dataflow network stages in the backend. Examples of specific embodiments include dedicated configuration registers or a memory-mapped space that holds setup parameters for functional units.

As used herein, and unless otherwise specified, the term "configuration data defining operational configurations of the dataflow network stages" refers to data that specifies the functions, control signals, and routing paths of the functional units within each stage of the dataflow backend. Examples of specific embodiments include bit patterns that enable specific operations, select input sources, or determine the sequence of data processing.

As used herein, and unless otherwise specified, the term "configuration index mechanism operative to select configuration data from the configuration memory to control the dataflow network stages in the backend" refers to a mechanism, such as a register or instruction field, that holds an index or pointer used to retrieve specific configuration data from the configuration memory. Examples of specific embodiments include an index register that selects among multiple configuration profiles stored in memory to modify the backend's operation.

As used herein, and unless otherwise specified, the phrase "without requiring dedicated instructions for each variation" refers to the ability of the processor to support multiple variations of operations through configurable hardware settings, eliminating the need for unique instructions in the instruction set for each possible operation. Examples of specific embodiments include using a single instruction with different configuration settings to perform various types of arithmetic operations, such as different precisions or operand sizes.

As used herein, and unless otherwise specified, the term "pipelined" refers to an arrangement where multiple processing stages are set up in a sequence, allowing overlapping execution of operations to increase processing throughput. Examples of specific embodiments include instruction pipelines in CPUs where different stages like fetch, decode, execute, and write-back operate concurrently on different instructions.

As used herein, and unless otherwise specified, the term "operand reuse" refers to the technique of using the same operand multiple times within one or more stages of processing to reduce the need for additional data fetches, thus improving efficiency. Examples of specific embodiments include retaining a frequently used value in a register or cache within the dataflow backend to avoid repeated memory accesses.

As used herein, and unless otherwise specified, the phrase "output precision is less than or equal to the size of a register in the register file to enable writing outputs without requiring additional register file ports" refers to designing the output data such that it fits within a single register, avoiding the need for extra hardware resources to store larger outputs. Examples of specific embodiments include ensuring that the combined results of parallel subword operations do not exceed the register's capacity.

As used herein, and unless otherwise specified, the term "memory-mapped input/output (MMIO) region" refers to a specific area of memory address space that is mapped to hardware registers or devices, allowing software to interact with hardware components via standard memory access operations. Examples of specific embodiments include configuration registers for peripheral devices accessed through specific memory addresses.

As used herein, and unless otherwise specified, the term "mask bits" refers to bits within the configuration data used to selectively enable or disable specific functional units or operations within each dataflow network stage during execution. Examples of specific embodiments include a set of bits where each bit corresponds to a functional unit, with a value of '1' enabling the unit and '0' disabling it.

As used herein, and unless otherwise specified, the term "control bits for directing data flow between successive dataflow network stages" refers to bits within the configuration data that determine the routing and flow of data between the different stages of the dataflow backend. Examples of specific embodiments include bits that select whether the output of one stage is passed to the next stage or fed back to an earlier stage.

As used herein, and unless otherwise specified, the phrase "broadcasted to all threads within the SIMT processor core" refers to sending the same configuration data or control signals simultaneously to all executing threads in the processor core to ensure consistent operation across threads. Examples of specific embodiments include distributing a configuration change to all threads in a GPU so they execute the same operation with the same parameters.

As used herein, and unless otherwise specified, the term "status register" refers to a processor register that stores information regarding the state or configuration of the processor, such as flags or indexes that influence operation. Examples of specific embodiments include registers that hold flags for arithmetic conditions or that store the current configuration index for selecting operational settings.

As used herein, and unless otherwise specified, the term "instruction size constraints" refers to limitations on the amount of information that can be encoded within a single instruction due to its fixed size, which affects the number of operations or data that can be specified directly. Examples of specific embodiments include a 32-bit instruction format where only a limited number of bits are available for immediate values or indexes, restricting the range of directly addressable configurations.

As used herein, and unless otherwise specified, the phrase "variable levels of subword parallelism" refers to the capability of the processor to adjust the number and size of subwords being processed in parallel, allowing for different degrees of parallelism based on the requirements of the computation. Examples of specific embodiments include configuring a register to handle either four 16-bit operations or eight 8-bit operations simultaneously, depending on the desired precision and performance.

As used herein, and unless otherwise specified, the term "non-transitory computer-readable storage medium" refers to any physical storage medium that can store instructions or data in a form accessible by a computer, excluding transitory signals or waves. Examples of specific embodiments include solid-state drives, hard disk drives, flash memory devices, optical discs, and magnetic storage media.

As used herein, and unless otherwise specified, the expression "instructions that, when executed by a Single Instruction Multiple Threads (SIMT) processor core comprising a configurable dataflow backend and a configuration memory, cause the processor to... (perform an action)" refers to software programs or code sequences designed to run on the specified hardware, causing it to perform the described operations or methods. Examples of specific embodiments include compiled code or firmware that configures the processor's dataflow backend and executes mixed-precision arithmetic operations as detailed in the claims.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a Single Instruction Multiple Threads (SIMT) processor core (100) comprising a SIMT frontend (11), for managing control flow and issuing instructions to a group of threads (a warp) in a way that all threads in the warp follow the same instruction sequence, even if they work on different pieces of data; and a SIMT backend (12), including hardware for performing arithmetic, logic or data operations on the data assigned to each thread.

In the context of the present invention, the backend (12) is a configurable dataflow system, meaning that it can adapt to perform mixed-precision arithmetic operations efficiently by using functional units that process data in parallel. The configurable dataflow backend (12) is operative to support subword parallelism for execution of mixed-precision arithmetic operations. The backend (12) includes multiple dataflow network stages, each dataflow network stage including one or more functional units (20) configurable to process multiple subwords within a register in parallel.

The dataflow backend (12) is configured using a configuration memory (13) storing configuration data defining operational configurations of the dataflow network stages in the backend (12). The configuration memory is accessible via a configuration index mechanism (14) operative to select configuration data from the configuration memory (13) to control the dataflow network stages in the backend (12). A configuration index for a particular stage comes as part of an instruction to index the configuration memory for that stage. The configuration index mechanism (14) enables the dataflow backend (12) to support multiple variations of mixed-precision arithmetic operations without requiring dedicated instructions for each variation.

It is an advantage of embodiments of the present invention that efficient execution of mixed-precision arithmetic operations is enabled without the need for multiple dedicated instructions. The fact of using a unified configuration memory, as opposed to the use of multiple distinct mask registers and predicate registers as known from the prior art, also provides an efficiency gain.

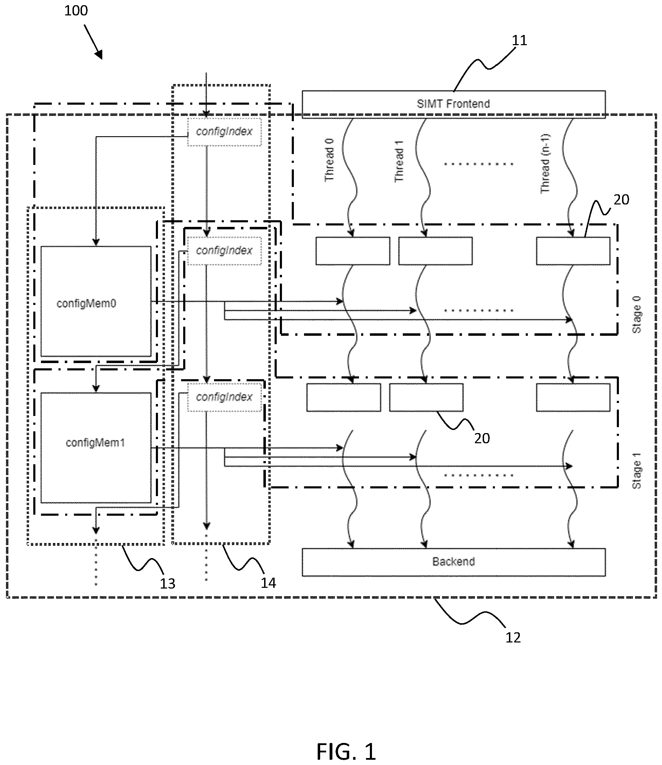

As illustrated for the embodiment of FIG. 1, the dataflow backend (12) may be pipelined. This allows for high-throughput execution. The dataflow backend (12) may include multiple pipeline stages, enabling complex dataflow graphs to be implemented. Specifically, the dataflow backend (12) may include at least three pipeline stages (not illustrated), providing a good balance between complexity and performance.

The pipelined dataflow backend (12) may be configured stagewise using a configuration memory (13) having a plurality of configuration memory stages (ConfigMem), and a configuration index mechanism (14) having a plurality of configuration index mechanism stages (ConfigIndex). Each configuration index mechanism stage (ConfigIndex) points to a location in a corresponding configuration memory stage (ConfigMem) that stores configuration bits for controlling a corresponding dataflow network stage (Stage 0, Stage 1) in the backend (12). The configuration index mechanism (14) may be incorporated either as part of an instruction or as the value of a status register.

In embodiments, as illustrated in FIG. 1, the dataflow backend (12) is thus configured as a pipelined dataflow network with multiple pipeline stages. Each pipeline stage (Stage 0, Stage 1) may include functional units (20) configurable via control bits in configuration data to perform arithmetic operations on subwords within registers specific to individual threads. In embodiments, no data is shared between threads within any pipeline stage, allowing each thread to process its data independently. This implementation simplifies control logic and reduces hardware complexity associated with inter-thread communication, while enabling high-throughput execution of mixed-precision arithmetic operations through independent per-thread computation.

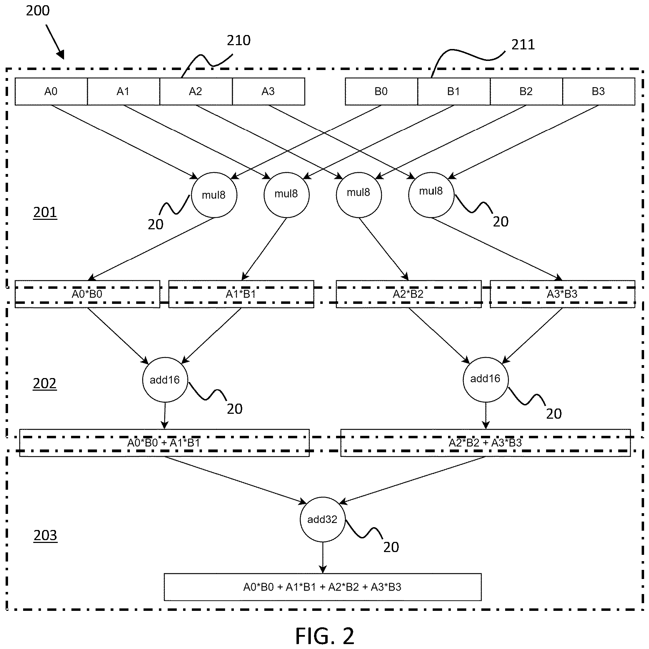

For example, referring to FIG. 2, a three-stage dataflow graph (200) for a fused multiply-add (FMA) operation on packed 8-bit integers in a 32-bit architecture is illustrated.

When considering the case of Fused Multiply Add (FMA) across n thread lanes of a SIMT core (100), it can be assumed, without loss of generality, that the operands $A_i$, $B_i$ are 8-bit integers and the output $C_i$ is a 32-bit integer, where n = 4 in case of a 32-bit architecture (width of register is 32 bits). FMA in the packed execution mode can be defined as follows:

$$C_i = \sum_{i=0}^{n-1} A_i * B_i$$

At the beginning of the dataflow, $A_i$, $B_i$ are stored in packed format (4 x 8-bits each) within first operand register (210 - indicated rs1 in below code) and second operand register (211 - indicated rs2 in below code), respectively. This implies that the number of ports in the register file do not need to be modified. The control program for this packed FMA execution could be as follows.

```
set status_reg 01
f_fmadd_a8_b8 rs0, rs1, rs2
f_fmadd_a8_b8 rs3, rs3, rs4
```

This code configures an SIMT processor core 100 for a specific mode using the status register, followed by tow FMA instructions operating on registers with mixed precision.

The first instruction set status_reg 01 sets a status register to a value of 01. The status register controls or indicates specific functional unit modes or flags. In particular, setting 01 might enable a specific operational mode, such as for instance mixed-precision arithmetic; or configure precision or rounding modes; or activate specific hardware features in the dataflow backend (12). The second instruction f_fmadd_a8_b8 rs0, rs1, rs2 is an FMA instruction, where _a8_b8 specifies mixed-precision artithmetic, where a8 is the precision of the first operand stored in register rs1 and b8 is the precision of the second operand stored in register rs2. These could for instance represent 8-bit floating point formats. In the above code, rs0, rs1, rs2 are the registers that hold the operands. rs1 and rs2 are multiplied, the result is added to rs0 and the final result is stored back in rs0.

The third instruction f_fmadd_a8_b8 rs3, rs3, rs4 is similar to the second instruction, but operates on different registers: rs3 and rs4 are multiplied, the result is added to rs3 and the final result is stored back in rs3.

The proposed dataflow-based execution, may be considered, in accordance with embodiments of the present invention, to have multiple pipeline stages (201, 202, 203), where the inputs of a subsequent stage s+1 arrives from a previous stage s. Corresponding to each stage (201, 202, 203), there is a configuration memory (see ConfigMem0, ConfigMem1 in FIG. 1), which stores the bits to control the dataflow in that stage, and to select the function of the functional unit 20. Each functional unit 20 can be referred to as a node in the dataflow network, as illustrated in FIG. 2. A functional unit 20 can support multiple arithmetic operations-addition, multiplication, min, max, etc. In a given cycle, a particular node, hence functional unit 20, is configured either to perform one of a plurality of arithmetic operations, which allows supporting common arithmetic operations, or to remain non-functional. This provides flexibility to map different dataflow graphs. The functional units (20) may be configurable via control bits in the configuration data, allowing compact encoding of the dataflow configuration. Assuming $o_d$ outputs of a node, the number of control bits needed for configuration of one node is $ceil(log_2 (o_d))$.

In the case detailed in **Fout! Verwijzingsbron niet gevonden.,** the dataflow graph (200) has three stages (201, 202, 203), and for each stage, the configuration memory (not illustrated in FIG. 2) is preloaded. All functional units (20) are configured to perform either a multiplication or an addition operation.

In Stage 0 (201), the 8-bit inputs (A0, ..., A3; B0, ..., B3) from two source registers (210, 211) are multiplied, producing 16-bit results (A0*B0, ..., A3*B3).

In Stage 1 (202), the consecutive outputs (A0*B0, ..., A3*B3) from Stage 0 (201) are summed to produce 16-bit outputs (A0*B+A1*B1; A3*B3+A4*B4).

In Stage 2 (203), the two outputs (A0*B0+A1*B1; A3*B3+A4*B4) from Stage 1 (202) are added to produce the final 32-bit output (A0*B0+A1*B1+ A3*B3+A4*B4).

This demonstrates how the dataflow backend (12) can be configured to perform common arithmetic operations such as multiplication and addition across multiple pipeline stages (201, 202, 203).

In the example illustrated in FIG. 2, none of the functional units (20) was configured to remain inactive. Nevertheless, each stage (201, 202, 203) may have a mask bit to enable or disable the relevant functional units (20). Depending on the intended operation to be mapped to the dataflow, multiple functional units (20) may be turned off at any stage of the network.

The above example has fixed precision for operands involved in an operation within a pipeline stage and mixed-precision across the pipeline stages.

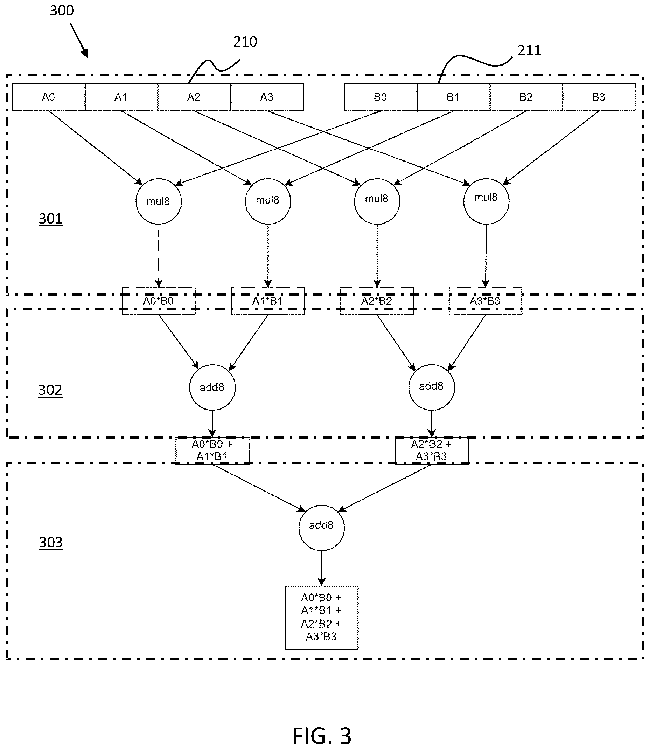

In alternative embodiments, the dataflow backend (12) may be configured to perform at least one of rounding, truncation, fixed-point arithmetic, and normalization to manage precision across pipeline stages, enabling handling of different precision requirements. As illustrated in FIG. 3, a dataflow graph (300) utilizing the FMA pipeline for fixed-precision operands (packed 8-bit) within a pipeline stage and across the different pipeline stages in a 32-bit architecture is shown.

In the case detailed in **Fout! Verwijzingsbron niet gevonden.3,** the dataflow graph (300) has three stages (301, 302, 303), and for each stage, the configuration memory (not illustrated in FIG. 3) is preloaded. All functional units (20) are configured to perform either a multiplication or an addition operation. Rounding, truncation, fixed-point arithmetic, and normalization can be used to maintain fixed-point precision across the pipeline stages.

In Stage 0 (301), the 8-bit inputs (A0, ..., A3; B0, ..., B3) from two source registers (210, 211) are multiplied, producing 8-bit results (A0*B0, ..., A3*B3).

In Stage 1 (302), the consecutive outputs (A0*B0, ..., A3*B3) from Stage 0 (301) are summed to produce 8-bit outputs (A0*B0+A1*B1; A3*B3+A4*B4).

In Stage 2 (303), the two outputs (A0*B0+A1*B1; A3*B3+A4*B4) from Stage 1 (302) are added to produce the final 8-bit output (A0*B0+A1*B1+ A3*B3+A4*B4).

The functional units 20 may also be configurable to perform approximate computations, thus adjusting output precision. This can provide performance and energy efficiency benefits for error-tolerant applications.

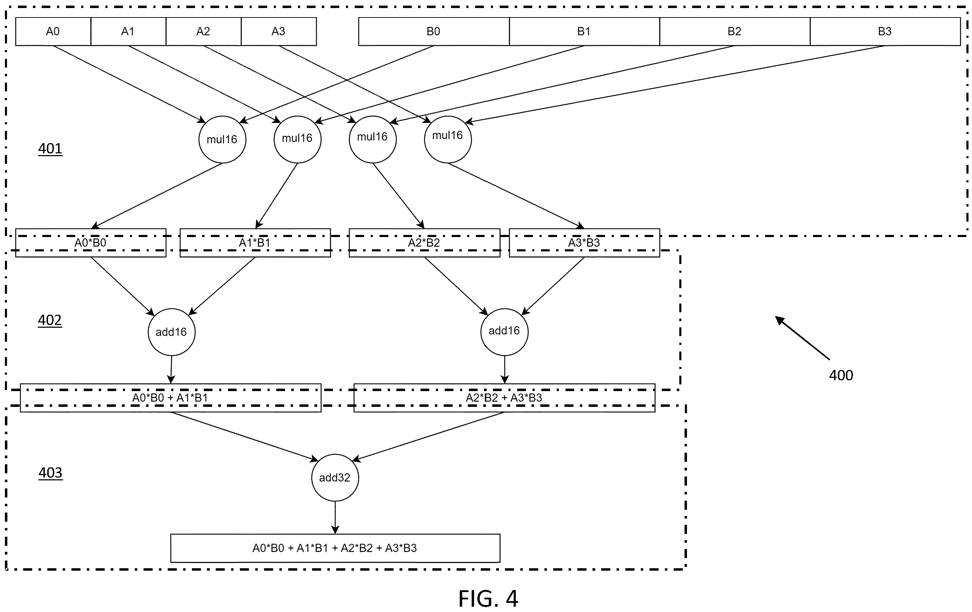

Yet another embodiment is explained with respect to FIG. 4, illustrating a dataflow graph (400) utilizing the FMA pipeline for mixed-precision operands (packed 8-bit and packed 16-bit) in a 64-bit architecture. FIG. 4 highlights the data flow graph (400) with mixed precision for operands both within and across pipeline stages (401, 402, 403). The choice of functional unit 20 and the precision of inputs and outputs are orthogonal to the proposed approach. For example, the inputs could be very well floating-point number or integers. Depending on the choice of the output precision, the computation can be approximate (for example, the result of adding two 16b numbers stored as 16b output) which can potentially lead to savings in energy and hardware implementation. The precision of final output by the dataflow network is always less than or equal to the size of the register file (e.g. 32b in this example). This allows effectively writing back to the thread-specific register file of the SIMT core, without additional ports.

The configuration index mechanism may enable support for variable levels of subword parallelism, allowing the dataflow to be optimized for different data types.

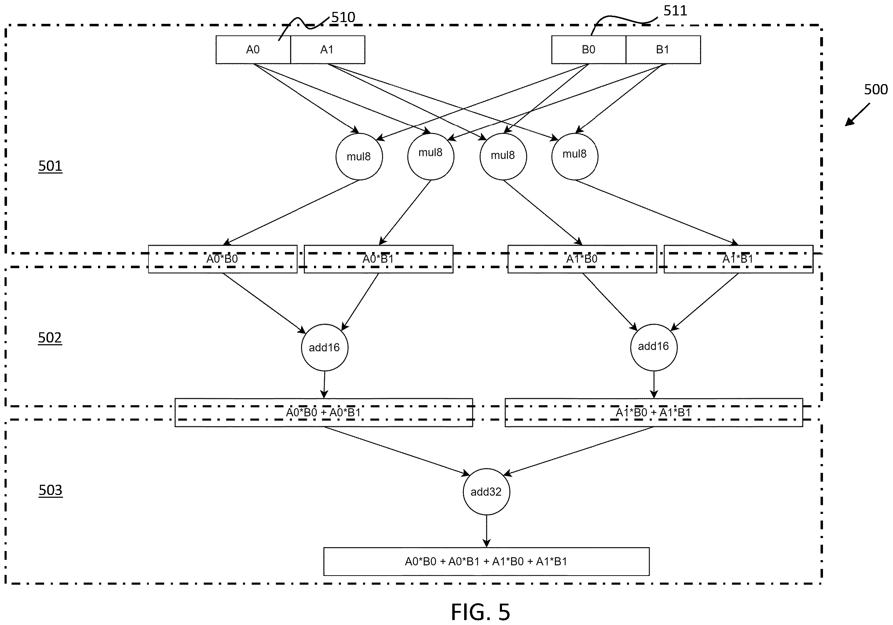

Operand reuse may be performed within at least one pipeline stage to reduce data fetch overhead, improving performance by reducing memory bandwidth requirements. Referring to FIG. 5, a dataflow graph (500) for other math expressions utilizing the FMA pipeline for packed 8-bit integers with a reuse of operands (2x in this example, for the first pipeline stage 501) in a 16-bit architecture is illustrated. This demonstrates subword parallelism and higher reuse of operands, which can reduce data fetch overhead and increase throughput in terms of operations per byte fetched. This approach is extendable to n-bit architectures.

In the case detailed in **Fout! Verwijzingsbron niet gevonden.5,** the dataflow graph (500) has three stages (501, 502, 503), and for each stage, the configuration memory (not illustrated in FIG. 5) is preloaded. All functional units (20) are configured to perform either a multiplication or an addition operation. Rounding, truncation, fixed-point arithmetic, and normalization can be used to maintain fixed-point precision across the pipeline stages.

In Stage 0 (501), the 8-bit inputs (A0, A1; B0, B1) from two source registers (510, 511) are multiplied, producing 8-bit results (A0*B0, A0*B1, A1*B0, A1*B1). Herein, the 8-bit integers A0, A1 and B0, B1 are reused, once fetched.

In Stage 1 (502), the consecutive outputs (A0*B0, A0*B1, A1*B0, A1*B1) from Stage 0 (501) are summed to produce 16-bit outputs (A0*B0+A0*B1; A1*B0+A1*B1).

In Stage 2 (503), the two outputs (A0*B0+A0*B1; A1*B0+A1*B1) from Stage 1 (502) are added to produce the final 32-bit output (A0*B0+A0*B1+A1*B0+A1*B1).

The output precision of the dataflow backend (12) may be less than or equal to the size of a register in the register file to enable writing outputs without requiring additional register file ports. This simplifies the register file design.

In embodiments of the present invention, the configuration memory (13) may be a memory-mapped input/output (MMIO) region, allowing easy access to the configuration memory (13). The configuration data may include mask bits for selectively enabling or disabling functional units (20) within each dataflow network stage during execution, providing fine-grained control over the dataflow. The configuration data may include control bits for directing data flow between successive dataflow network stages, allowing flexible dataflow patterns to be implemented.

In embodiments of the present invention, the configuration data may be broadcast to all threads within the SIMT processor core (100), amortizing the overhead of storing the configuration bits across multiple threads. The proposed approach of embodiments of the present invention offers a high throughput high density computation solution for narrow precision computing. It also offers lowered memory requirements since packed information can be directly loaded into the register files.

In embodiments of the present invention, the configuration index mechanism (14) may comprise a status register storing a configuration index value, allowing a larger configuration space to be addressed. The configuration index mechanism (14) may be incorporated as part of an instruction in an instruction set architecture, providing a compact way to specify the configuration. Including the configuration index in an instruction may allow addressing a limited number of configurations due to instruction size constraints, leading to a simpler design. In alternative implementations, including the configuration index in a status register may allow addressing a larger configuration memory for a wider range of dataflow options, enabling more flexibility.

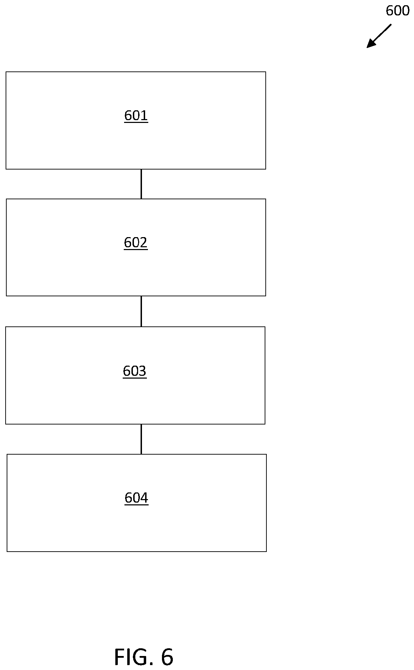

In a second aspect, and as schematically illustrated in FIG. 6, the present invention relates to a method (600) of executing mixed-precision arithmetic operations in a Single Instruction Multiple Threads (SIMT) processor core (100). The method (600) comprises utilizing (601) a configurable dataflow backend (12) to perform subword parallelism, wherein the backend (12) includes multiple dataflow network stages (Stage 0, Stage 1), each dataflow network stage (Stage 0, Stage 1) comprising one or more functional units (20) configurable to process multiple subwords within a register in parallel. The method (600) further involves accessing (602) configuration data from a configuration memory (13) that stores operational configurations for the dataflow network stages (Stage 0, Stage 1) and selecting (603) the configuration data via a configuration index mechanism (14) to control the dataflow network stages (Stage 0, Stage 1) in the backend (12), wherein the configuration index mechanism (14) enables support for multiple variations of mixed-precision arithmetic operations without requiring dedicated instructions for each variation.

The method (600) may further comprise configuring (604) the functional units (20) via control bits in the configuration data, allowing compact encoding of the dataflow configuration.

In particular embodiments, the method (600) may comprise configuring (604) one or more of the functional units (20) to perform at least one of rounding, truncation, fixed-point arithmetic, and normalization to manage precision across pipeline stages, enabling handling of different precision requirements. In particular embodiments, the method (600) may further comprise configuring (604) one or more of the functional units (20) to perform approximate computations by adjusting output precision, which can provide performance and energy efficiency benefits for error-tolerant applications.

The method (600) may further comprise performing operand reuse within at least one pipeline stage to reduce data fetch overhead, improving performance by reducing memory bandwidth requirements.

In a method (600) according to embodiments of the present invention, output precision may be limited to the size of a register in a register file to enable writing outputs without requiring additional register file ports, simplifying the register file design.

The method (600) may further comprise broadcasting the configuration data to all threads within the SIMT processor core (100), thus amortizing the configuration overhead across multiple threads.

The method (600) may further comprise setting a status register with a configuration index value to select the configuration data, allowing a larger configuration space to be addressed.

## Claims

1. A Single Instruction Multiple Threads (SIMT) processor core (100) comprising:

   (a) a configurable dataflow backend (12) operative to support subword parallelism for execution of mixed-precision arithmetic operations, wherein the backend (12) includes multiple dataflow network stages (Stage 0, Stage 1), each dataflow network stage (Stage 0, Stage 1) including one or more functional units (20) configurable to process multiple subwords within a register in parallel; and
   (b) a configuration memory (13) storing configuration data defining operational configurations of the dataflow network stages (Stage 0, Stage 1) in the backend (12), wherein the configuration memory (13) is accessible via a configuration index mechanism (14) operative to select configuration data from the configuration memory (13) to control the dataflow network stages (Stage 0, Stage 1) in the backend (12),

   wherein the configuration index mechanism (14) is configured for enabling the dataflow backend (12) to support multiple variations of mixed-precision arithmetic operations without requiring dedicated instructions for each variation.

2. The SIMT processor core according to claim 1, wherein the dataflow backend is pipelined.

3. The SIMT processor core according to claim 2, wherein the dataflow backend includes multiple pipeline stages.

4. The SIMT processor core according to any one of claims 1 to 3, wherein each functional unit is configurable to perform at least one of addition, multiplication, minimum, and maximum operations.

5. The SIMT processor core according to any one of claims 1 to 4, wherein each functional unit is configurable to perform a selected arithmetic operation or remain inactive in any cycle.

6. The SIMT processor core according to any one of claims 1 to 5, wherein the output precision of the dataflow backend is less than or equal to the size of a register in the register file to enable writing outputs without requiring additional register file ports.

7. The SIMT processor core according to any one of claims 1 to 6, wherein the configuration index mechanism comprises a status register storing a configuration index value.

8. The SIMT processor core according to any one of claims 1 to 7, wherein the configuration index mechanism is incorporated as part of an instruction in an instruction set architecture.

9. A method (600) of executing mixed-precision arithmetic operations in a Single Instruction Multiple Threads (SIMT) processor core (100), the method comprising:

(a) utilizing (601) a configurable dataflow backend (12) to perform subword parallelism, wherein the backend (12) includes multiple dataflow network stages (Stage 0, Stage 1), each dataflow network stage (Stage 0, Stage 1) comprising one or more functional units (20) configurable to process multiple subwords within a register in parallel;
(b) accessing (602) configuration data from a configuration memory (13) that stores operational configurations for the dataflow network stages (Stage 0, Stage 1);
(c) selecting (603) the configuration data via a configuration index mechanism (14) to control the dataflow network stages (Stage 0, Stage 1) in the backend (12);

wherein the configuration index mechanism (14) enables support for multiple variations of mixed-precision arithmetic operations without requiring dedicated instructions for each variation.

10. The method according to claim 9, further comprising performing operand reuse within at least one pipeline stage to reduce data fetch overhead.

11. The method according to any one of claims 9 to 10, further comprising setting a status register with a configuration index value to select the configuration data.

12. A non-transitory computer-readable storage medium storing instructions that, when executed by a Single Instruction Multiple Threads (SIMT) processor core comprising a configurable dataflow backend and a configuration memory, cause the processor core to:

(a) execute mixed-precision arithmetic operations using subword parallelism through the configurable dataflow backend, wherein the backend includes multiple dataflow network stages with functional units configurable to process multiple subwords within a register in parallel;
(b) access configuration data defining operational configurations of the dataflow network stages from the configuration memory;
(c) select the configuration data via a configuration index mechanism to control the dataflow network stages in the backend;

wherein the configuration index mechanism enables the processor core to support multiple variations of mixed-precision arithmetic operations without requiring dedicated instructions for each variation.

FIG. 1

FIG. 2

FIG. 3

FIG. 4

EP 4 764 840 A1

FIG. 5

EP 4 764 840 A1

600

601

602

603

604

FIG. 6

# EUROPEAN SEARCH REPORT

**Application Number**

EP 24 22 1878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 396 530 A2 (INTEL CORP [US]) 31 October 2018 (2018-10-31) * the whole document * | 1-12 | INV. G06F9/30 |
| X | US 2022/365833 A1 (SHIN JAEWOOK [US] ET AL) 17 November 2022 (2022-11-17) * paragraph [0193] * * paragraph [0245] - paragraph [0247]; figure 23 * * paragraph [0165] * | 1-12 | |

TECHNICAL FIELDS SEARCHED (IPC)

G06F

The present search report has been drawn up for all claims

| Place of search | Date of completion of the search | Examiner |
|---|---|---|
| The Hague | 28 May 2025 | Moraiti, Marina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1878

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| EP 3396530 | A2 | 31-10-2018 | CN | 108734643 A | 02-11-2018 |
| | | | CN | 109712064 A | 03-05-2019 |
| | | | CN | 110543332 A | 06-12-2019 |
| | | | CN | 116777728 A | 19-09-2023 |
| | | | CN | 117764810 A | 26-03-2024 |
| | | | CN | 118394414 A | 26-07-2024 |
| | | | CN | 120013741 A | 16-05-2025 |
| | | | DK | 3958116 T3 | 16-10-2023 |
| | | | EP | 3396530 A2 | 31-10-2018 |
| | | | EP | 3543845 A2 | 25-09-2019 |
| | | | EP | 3663911 A1 | 10-06-2020 |
| | | | EP | 3958116 A1 | 23-02-2022 |
| | | | EP | 4290370 A1 | 13-12-2023 |
| | | | ES | 2906398 T3 | 18-04-2022 |
| | | | ES | 2960064 T3 | 29-02-2024 |
| | | | FI | 3958116 T3 | 09-10-2023 |
| | | | PL | 3543845 T3 | 07-03-2022 |
| | | | PL | 3958116 T3 | 18-12-2023 |
| | | | TW | 201839626 A | 01-11-2018 |
| | | | TW | 201921263 A | 01-06-2019 |
| | | | TW | 202013308 A | 01-04-2020 |
| | | | US | 2018307494 A1 | 25-10-2018 |
| | | | US | 2018307495 A1 | 25-10-2018 |
| | | | US | 2019146800 A1 | 16-05-2019 |
| | | | US | 2022382555 A1 | 01-12-2022 |
| | | | US | 2023315481 A1 | 05-10-2023 |
| US 2022365833 | A1 | 17-11-2022 | CN | 116783578 A | 19-09-2023 |
| | | | DE | 112022001140 T5 | 08-05-2024 |
| | | | JP | 2024519231 A | 10-05-2024 |
| | | | KR | 20220161255 A | 06-12-2022 |
| | | | US | 2022365783 A1 | 17-11-2022 |
| | | | US | 2022365833 A1 | 17-11-2022 |
| | | | US | 2022366007 A1 | 17-11-2022 |
| | | | US | 2022366008 A1 | 17-11-2022 |
| | | | WO | 2022241168 A1 | 17-11-2022 |

EPO FORM P0459

For more details about this annex : see Official Journal of the European Patent Office, No. 12/82

**REFERENCES CITED IN THE DESCRIPTION**

**Patent documents cited in the description**

- EP 2725484 A